# FASCICULE DE BREVET EUROPEEN

(11) **EP 0 716 560 B1**
(45) Date de publication et mention de la délivrance du brevet: **24.02.1999**
(21) Numéro de dépôt: 95402721.5
(22) Date de dépôt: 01.12.1995
(51) Int. Cl.: H05B 6/12, H05B 6/06

(54) **Dispositif de chauffage par induction de récipient et procédé de commande d'un tel dispositif**
Induktionsheizvorrichtung für Behälter und Steuerungsverfahren dafür
Induction heating device for container and method for controlling the same

(30) Priorité: 09.12.1994 FR 9414818
(43) Date de publication de la demande: 12.06.1996
(73) Titulaire: CIDELCEM INDUSTRIES, 77185 Lognes (FR)
(72) Inventeur: Gaspard, Jean-Yves, F-45770 Saran (FR)
(74) Mandataire: Boutin, Antoine

(56) Documents cités:
- WO-A-93/13634
- WO-A-94/05137
- DE-A- 3 332 990
- US-A- 3 275 784

## Description

L'invention est relative à un dispositif de chauffage par induction de récipient, ainsi qu'à un procédé de commande d'un tel dispositif.

Il est connu de chauffer par induction des récipients pour la cuisine au moyen d'inducteurs regroupés dans une plaque de cuisson.

Les plaques de cuisson de ce genre comportent généralement une bobine d'induction alimentée par l'intermédiaire d'un onduleur avec un courant à haute fréquence comprise entre 20 et 35 kHz. Cette bobine, de forme relativement plate, est disposée sous une plaque vitro-céramique ou en autre matériau approprié apte à être traversé par le champ magnétique produit par la bobine d'induction.

En raison de ce champ magnétique, des courants induits prennent naissance dans tout récipient en métal ferritique placé sur une telle plaque de cuisson. Ces courants induits ont pour effet d'échauffer ledit récipient, et lui seul, de manière connue en soi.

L'efficacité maximale de chauffage est obtenue lorsque le diamètre du récipient est à peu près identique au diamètre efficace de la plaque de cuisson.

Le document EP 0 376 760 décrit une plaque de cuisson par chauffage par induction présentant une efficacité maximale et conçue de façon à pouvoir recevoir des récipients de diamètre nettement différent.

Cette plaque de chauffage par induction comporte au moins deux éléments inducteurs distincts disposés concentriquement l'un autour de l'autre et branchés en parallèle aux bords d'un onduleur unique d'alimentation.

Ce dispositif donne généralement satisfaction, mais présente l'inconvénient de nécessiter un onduleur de puissance importante déterminée en fonction de la plaque de cuisson par induction à alimenter.

Le document FR 2 672 763 décrit un procédé et un dispositif de commande d'une plaque de cuisson par chauffage par induction permettant le transfert homogène de l'énergie vers un récipient devant être chauffé par induction, tout en apportant une réduction considérable des perturbations rayonnées par le champ magnétique généré. Dans ce procédé, on utilise un onduleur unique d'alimentation coopérant avec un bloc de commutation susceptible d'assurer l'alimentation sélective d'un ou plusieurs des inducteurs pour : alimenter périodiquement un premier inducteur pour détecter une charge éventuelle sur celui-ci ; alimenter, après détection d'une charge sur le premier inducteur, l'inducteur suivant pour détecter une charge éventuelle sur celui-ci ; et alimenter ainsi séquentiellement un seul ou plusieurs des inducteurs en fonction de la dimension de la charge détectée tout en détectant en permanence la présence de la charge sur l'inducteur alimenté.

Ces procédés et dispositifs connus donnent généralement satisfaction, mais nécessitent l'utilisation d'un onduleur unique d'alimentation de forte puissance, et d'un bloc de commutation commandé par un circuit comportant des moyens de traitement reliés aux inducteurs afin de recevoir des signaux correspondant à la charge disposée en regard de ceux-ci.

L'invention a pour but de perfectionner la technique de chauffage par induction en proposant un nouveau dispositif de chauffage par induction et un nouveau procédé de commande de ce dispositif, économique à l'installation et à l'utilisation, et permettant de recevoir des récipients de diamètres différents avec une efficacité de chauffage identique à ou meilleure que celle de l'art antérieur.

L'invention a pour objet un dispositif de chauffage par induction de récipients pour la cuisine, du type comportant au moins deux inducteurs concentriques alimentés par un générateur, caractérisé en ce que chaque inducteur est alimenté par un générateur distinct, le nombre d'inducteurs étant égal au nombre de générateurs d'alimentation.

Selon d'autres caractéristiques de l'invention :
- le dispositif comporte un bloc de commande de fonctionnement indépendant de chaque générateur d'alimentation;
- le bloc de commande est apte à faire fonctionner selon un ordre séquentiel les générateurs d'alimentation lors d'une étape de détection de présence d'une charge sur l'inducteur correspondant en partant du générateur correspondant à l'inducteur le plus concentrique jusqu'au générateur correspondant à l'inducteur concentriquement le plus extérieur recouvert par le récipient (9) à chauffer;
- le bloc de commande comporte des moyens de synchronisation en fréquence et en phase de l'ensemble des générateurs correspondant aux inducteurs devant être alimentés simultanénent lors d'une étape d'alimentation;
- les générateurs d'alimentation sont sensiblement identiques entre eux et présentent sensiblement la même puissance nominale, en vue du remplacement modulaire d'un générateur d'alimentation par un autre générateur d'alimentation de mêmes caractéristiques.

L'invention a également pour objet un procédé de chauffage par ledit dispositif comportant les étapes suivantes :
a) détecter un paramètre physique représentatif de la taille du récipient à chauffer,
b) déterminer à partir du paramètre physique détecté à l'étape a) les inducteurs à alimenter,
c) commander le fonctionnement de générateurs distincts associés aux inducteurs à alimenter déterminés à l'étape b).

Selon d'autres caractéristiques de l'invention :
- on détecte ledit paramètre physique en alimentant les générateurs selon un ordre séquentiel à partir du générateur correspondant à l'inducteur concentrique le plus extérieur recouvert par le récipient;
- on maintient l'alimentation des générateurs correspondant à la taille du récipient à chauffer tant que le récipient à chauffer recouvre les inducteurs correspondant auxdits générateurs;
- on synchronise en fréquence et en phase le fonctionnement de l'ensemble des générateurs correspondant aux inducteurs à alimenter.

L'invention sera mieux comprise grâce à la description qui va suivre donnée à titre d'exemple non limitatif en référence aux dessins annexés dans lequel :

La figure 1 représente schématiquement un dispositif de chauffage par induction selon l'invention.

La figure 2 représente schématiquement une vue en coupe verticale d'une plaque de cuisson d'un dispositif selon l'invention, sur laquelle est disposé un récipient de faible diamètre.

La figure 3 représente schématiquement un ordinogramme de fonctionnement d'un programme de commande d'un dispositif selon l'invention.

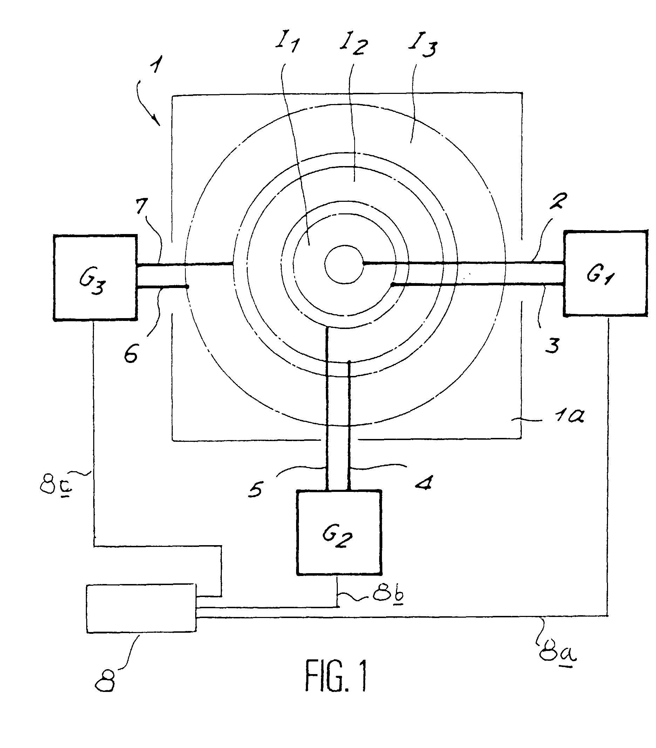

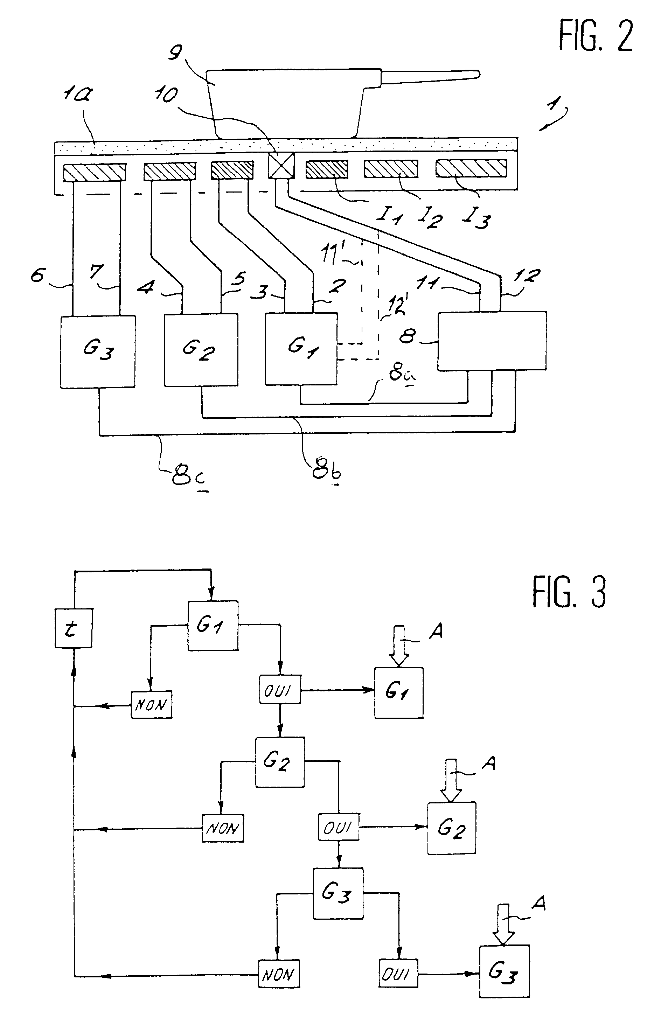

En référence aux figures 1 et 2, un dispositif de ce genre comporte une plaque de cuisson 1 de chauffage par induction comprenant un inducteur central I₁ et deux inducteurs concentriques I₂ et I₃ formés par des bobines d'induction de diamètre différent, ces inducteurs I₁, I₂, I₃ étant alimentés par un générateur d'alimentation .

Selon l'invention, chaque inducteur I₁ ou I₂ ou I₃ est alimenté par un générateur distinct G₁ ou G₂ ou G₃. De préférence, la commande de chaque générateur d'alimentation est indépendante de la commande des autres générateurs d'alimentation : ainsi, chaque inducteur I₁ ou I₂ ou I₃ peut être mis en service de façon indépendante de manière à chauffer sélectivement un récipient de cuisine en matériau ferritique.

Le générateur G₁ alimente directement l'inducteur I₁ par l'intermédiaire des liaisons conductrices 2 et 3 ; le générateur G₂ alimente directement l'inducteur I₂ par l'intermédiaire des liaisons conductrices 4 et 5 et le générateur G₃ alimente directement l'inducteur I₃ par l'intermédiaire des liaisons conductrices 6 et 7. L'invention appliquée à un nombre quelconque d'inducteurs supérieur à deux n'est nullement limitée à l'exemple décrit, mais couvre toute variante comportant un nombre quelconque d'inducteurs et un nombre quelconque de générateurs d'alimentation, étant entendu que chaque inducteur est alimenté par un générateur distinct et que le nombre d'inducteurs est ainsi égal au nombre de générateurs d'alimentation.

Avantageusement, les générateurs G₁, G₂, G₃ d'alimentation sont sensiblement identiques entre eux, et présentent notamment la même puissance nominale : on peut ainsi utiliser des générateurs standard de puissance de l'ordre de 3 kW et construire ainsi de manière modulaire un dispositif délivrant une puissance électrique correspondant à un multiple de 3 kW.

Un autre avantage de cette disposition est de permettre le fonctionnement en mode dégradé ou le remplacement modulaire d'un générateur d'alimentation défectueux par un autre générateur d'alimentation de même caractéristique.

Selon une variante perfectionnée de l'invention, le dispositif comporte un bloc de commande 8 de fonctionnement des générateurs d'alimentation G₁, G₂, G₃, qui détermine en fonction de la taille d'un récipient 9 (figure 2) quels sont les inducteurs à alimenter.

A cet effet, le bloc de commande 8 est apte à fonctionner en mode de détection de charge et en mode d'actionnement d'un générateur. Le bloc de commande 8 est relié à chaque générateur d'alimentation G₁, G₂, G₃ par une ligne respective bidirectionnelle de transmission de signaux 8a, 8b, 8c.

Grâce à ce bloc de commande 8, on alimente à une première étape le générateur G₁ correspondant à l'inducteur central I₁ et on détermine en fonction du courant parcourant l'inducteur I₁ si un récipient 9 est présent ou non. La détermination de présence au récipient 9 résulte du traitement d'un signal de détection de charge en provenance de l'inducteur I₁. Si un récipient 9 est détecté comme étant présent on passe à une deuxième étape.

Dans cette deuxième étape, on détermine à l'aide du générateur G₂ alimentant le deuxième inducteur concentrique I₂ si le récipient 9 recouvre l'inducteur I₂. Cette détermination s'effectue également à l'aide d'un signal de détection de charge obtenu en retour de l'inducteur I₂.

Si le récipient 9 ne recouvre pas l'inducteur I₂, on arrête le fonctionnement du générateur G₂ pendant une durée de temps prédéterminée jusqu'à une nouvelle étape de détection de la charge sur l'inducteur I₂, cette détection étant effectuée à des intervalles de temps *t* prédéterminés.

En fonction du nombre d'inducteurs concentriques présents, on effectue des étapes ultérieures similaires à la deuxième étape précitée de manière à déterminer le nombre d'inducteurs à alimenter et on commande le fonctionnement des générateurs correspondant aux inducteurs à alimenter.

Lors de cette détermination de la charge, on alimente de préférence les générateurs G₁, G₂, G₃ ou autres selon un ordre séquentiel à partir du générateur G₁ correspondant à l'inducteur central I₁ jusqu'au générateur correspondant à l'inducteur concentriquement le plus extérieur recouvert par le récipient 9 : cette disposition évite la déformation des récipients 9 et augmente notablement leur longévité.

Le bloc de commande à contient un programme qui détermine de façon régulière et séquentielle si un récipient est présent au moyen d'un paramètre physique représentatif de la taille du récipient à chauffer, ce paramètre physique étant de préférence constitué par le signal de détection de charge en provenance des inducteurs alimentés au moyen d'un signal faible de sélection.

Etant donné que la détection est faite à intervalles de temps réguliers prédéterminés *t*, on s'assure en permanence que le récipient n'a pas été enlevé ou remplacé par un récipient de diamètre ou de taille différente. Le programme contenu dans le bloc de commande 8 est prévu pour que la présence d'un récipient provoque le maintien de l'alimentation de l'inducteur recouvert par le récipient et que l'absence de récipient recouvrant l'inducteur arrête l'alimentation de cet inducteur.

De manière connue, la plaque de cuisson 1 peut comprendre sous la plaque en vitro-céramique 1a ou autre matériau approprié susceptible d'être traversé par le champ magnétique produit, une sonde thermique 10 disposée centralement et sensiblement concentriquement à l'inducteur central I₁. La sonde thermique 10 transmet par l'intermédiaire de liaisons filaires 11 et 12 un signal représentatif de la température du récipient 9. Ce signal est reçu par le bloc de commande 8 contenant un microprocesseur programmable au moyen d'un programme approprié définissant des cycles de chauffe en fonction des produits contenus dans le récipient 9.

La sonde thermique 10 est selon une variante reliée au premier générateur G₁ par des liaisons filaires 11' et 12' indiquées en traits interrompus sur la figure 2. Le signal de la sonde thermique 10 est dans ce cas transmis au bloc de commande 8 par l'intermédiaire du générateur G₁.

En référence à la figure 3, un procédé de chauffage par induction de récipient pour la cuisine comporte les étapes suivantes :

A une première étape, on détecte un paramètre physique représentatif de la taille du récipient à chauffer. A cet effet, on alimente l'inducteur I₁ au moyen du générateur G₁ avec un signal électrique de sélection et on récupère un signal de détection de charge, c'est-à-dire de présence d'un récipient 9. Si un récipient est présent ("OUI") on passe à une deuxième étape analogue pour le générateur G₂. Cependant, si aucun récipient n'est présent ("NON") sur l'inducteur I₁, on recommence la scrutation au bout d'un temps *t* prédéterminé de faible durée de l'ordre d'une seconde.

A la deuxième étape, correspondant à la détection sur l'inducteur I₂ suite à la constatation de la présence d'un récipient 9 sur l'inducteur I₁, on alimente le générateur G₂ avec un signal de sélection et on reçoit un signal de détection de charge permettant de déterminer si le récipient 9 présent sur l'inducteur I₁ recouvre également l'inducteur I₂. Si le récipient présent ne recouvre pas l'inducteur I₂ ("NON"), on alimente l'inducteur I₁ avec le générateur G₁.

Si le récipient 9 recouvre l'inducteur I₂ ("OUI") on effectue une étape de détection analogue pour le générateur G₃ que l'on alimente avec un signal de sélection afin de déterminer si l'inducteur I₃ est recouvert par le récipient présent. Si le récipient présent ne recouvre pas l'inducteur I₃ ("NON"), on alimente simultanément les inducteurs I₁ et I₂ en vue du chauffage du récipient en alimentant les générateurs G₁ et G₂ avec l'alimentation de puissance A appropriée.

Si le récipient présent recouvre l'inducteur I₃ ("OUI"), on alimente les inducteurs I₁, I₂ et I₃ en vue du chauffage du récipient en alimentant simultanément les générateurs G₁, G₂ et G₃ avec l'alimentation de puissance A appropriée.

Le bloc de commande 8 comporte en outre des moyens de synchronisation en fréquence et en phase de l'ensemble des générateurs G₁, G₂, G₃ etc du dispositif de chauffage. Ces moyens de synchronisation entrent en fonction lorsque au moins deux des générateurs doivent être alimentés simultanément pour correspondre à une certaine dimension du récipient.

Comme on le voit, la mise en oeuvre de l'invention est grandement facilitée en prévoyant que les générateurs G₁, G₂, G₃ sont sensiblement identiques et présentent la même puissance nominale de fonctionnement.

## Revendications

1. Dispositif de chauffage par induction de récipients pour la cuisine, du type comportant au moins deux inducteurs concentriques alimentés par un générateur, caractérisé en ce que chaque inducteur (I₁, I₂, I₃) est alimenté par un générateur (G₁, G₂, G₃) distinct, le nombre d'inducteurs étant égal au nombre de générateurs d'alimentation.

2. Dispositif selon la revendication 1, caractérisé en ce qu'il comporte un bloc de commande (8) de fonctionnement indépendant de chaque générateur d'alimentation (G₁, G₂, G₃).

3. Dispositif selon la revendication 2, caractérisé en ce que le bloc de commande (8) est apte à faire fonctionner selon un ordre séquentiel les générateurs d'alimentation (G₁, G₂, G₃) lors d'une étape de détection de présence d'une charge sur l'inducteur correspondant (I₁, I₂, I₃) en partant du générateur (G₁) correspondant à l'inducteur (I₁) le plus concentrique jusqu'au générateur correspondant à l'inducteur concentriquement le plus extérieur recouvert par le récipient (9) à chauffer.

4. Dispositif selon la revendication 3, caractérisée en ce que le bloc de commande (8) comporte des moyens de synchronisation en fréquence et en phase de l'ensemble des générateurs (G₁, G₂, G₃) correspondant aux inducteurs (I₁, I₂, I₃) devant être alimentés simultanément lors d'une étape d'alimentation.

5. Dispositif selon l'une quelconque des revendications précédentes, caractérisé en ce que les générateurs (G₁, G₂, G₃) d'alimentation sont sensiblement identiques entre eux et présentent sensiblement la même puissance nominale, en vue du remplacement modulaire d'un générateur d'alimentation par un autre générateur d'alimentation de mêmes caractéristiques.

6. Procédé de chauffage par un dispositif selon les revendications 1 à 5 comportant les étapes suivantes :
a) détecter un paramètre physique représentatif de la taille du récipient (9) à chauffer,
b) déterminer à partir du paramètre physique détecté à l'étape a) les inducteurs (I₁, I₂, I₃) à alimenter,
c) commander le fonctionnement de générateurs distincts (G₁, G₂, G₃) associés aux inducteurs (I₁, I₂, I₃) à alimenter déterminés à l'étape b).

7. Procédé selon la revendication 6, caractérisé en ce que l'on détecte ledit paramètre physique en alimentant les générateurs (G₁, G₂, G₃) selon un ordre séquentiel à partir du générateur (G₁) correspondant à l'inducteur central jusqu'au générateur correspondant à l'inducteur (I₁) concentrique le plus extérieur recouvert par le récipient (9).

8. Procédé selon la revendication 6 ou la revendication 7, caractérisé en ce que l'on maintient l'alimentation des générateurs (G₁, G₂, G₃) correspondant à la taille du récipient (9) à chauffer tant que le récipient (9) à chauffer recouvre les inducteurs (I₁, I₂, I₃) correspondant auxdits générateurs (G₁, G₂, G₃).

9. Procédé selon l'une des revendications 6 à 8, caractérisé en ce que l'on synchronise en fréquence et en phase le fonctionnement de l'ensemble des générateurs (G₁, G₂, G₃) correspondant aux inducteurs à alimenter.

## Patentansprüche

1. Induktionsheizvorrichtung für Behälter für die Küche, wobei mindestens zwei konzentrisch angeordnete, durch einen Generator versorgte Induktionseinrichtungen vorgesehen sind, dadurch gekennzeichnet, daß jede der Induktionseinrichtungen (I₁, I₂, I₃) durch einen bestimmten Generator (G₁, G₂, G₃) versorgt ist, wobei die Anzahl der Induktionseinrichtungen gleich der Anzahl der Versorgungsgeneratoren ist.

2. Induktionsheizvorrichtung nach Anspruch 1, dadurch gekennzeichnet, daß eine Steuereinrichtung (8) vorgesehen ist, die jeden Versorgungsgenerator (G₁, G₂, G₃) unabhängig ansteuert.

3. Induktionsheizvorrichtung nach Anspruch 2, dadurch gekennzeichnet, daß die Steuereinrichtung (8) zum reihenweisen Einschalten der Versorgungsgeneratoren (G₁, G₂, G₃) während eines Schritts zur Anwesenheitserkennung einer Last auf der entsprechenden Induktionseinrichtung (I₁, I₂, I₃) ausgebildet ist, indem von dem der innersten konzentrischen Induktionseinrichtung (I₁) zugehörigen Generator (G₁) bis hin zum der äußersten, durch den Behälter (9) abgedeckten, konzentrischen Induktionseinrichtung zugehörigen Generator weitergeschaltet wird.

4. Induktionsheizvorrichtung nach Anspruch 3, dadurch gekennzeichnet, daß die Steuereinrichtung (8) eine Synchronisierungseinrichtung für die Frequenz und für die Phase der Gesamtheit der Generatoren (G₁, G₂, G₃) entsprechend denjenigen Induktionseinrichtungen (I₁, I₂, I₃) aufweist, die während eines Versorgungsschritts gleichzeitig versorgt werden.

5. Induktionsheizvorrichtung nach einem der vorangehenden Ansprüche, dadurch gekennzeichnet, daß die Versorgungsgeneratoren (G₁, G₂, G₃) im wesentlichen identisch ausgebildet sind und im wesentlichen die gleiche Nominalleistung, für eine modulare Auswechselbarkeit eines Versorgungsgenerators gegen einen anderen Versorgungsgenerator gleicher Merkmalen aufweisen.

6. Verfahren zum Erhitzen mit einer Induktionsheizvorrichtung nach den Ansprüchen 1 bis 5 mit den folgenden Schritten :
(a) Aufnehmen eines für den Umfang des zu erhitzenden Behälters (9) repräsentativen physikalischen Parameters,
(b) Bestimmen der zu versorgenden Induktionseinrichtungen (I₁, I₂, I₃) gemäß dem in Schritt a) aufgenommenen physikalischen Parameter,
(c) Ansteuern zum Einschalten von den Induktionseinrichtungen (I₁, I₂, I₃) zugeordneten, gemäß Schritt b) bestimmten Versorgungsgenerator (G₁, G₂, G₃).

7. Verfahren nach Anspruch 6, dadurch gekennzeichnet, daß der physikalische Parameter aufgenommen wird, indem von dem der mittleren Induktionseinrichtung zugehörigen Generator (G₁) bis hin zum der äußersten, durch den Behälter (9) abgedeckten, konzentrischen Induktionseinrichtung zugehörigen Generator weitergeschaltet wird.

8. Verfahren nach Anspruch 6 oder 7, dadurch gekennzeichnet, daß die Versorgung der Generatoren (G₁, G₂, G₃) entsprechend dem Umfang des zu erhitzenden Behälters (9) solange aufrechterhalten wird, wie der zu erhitzende Behälter (9) die den Generatoren (G₁, G₂, G₃) entsprechenden Induktionseinrichtungen (I₁, I₂, I₃) abdeckt.

9. Verfahren nach einem der Ansprüche 6 bis 8, dadurch gekennzeichnet, daß die frequenzmäßige und die phasenmäßige Arbeitsweise der Gesamtheit der Generatoren (G₁, G₂, G₃) entsprechend den zu versorgenden Induktionseinrichtungen synchronisiert werden.

## Claims

1. Device for the induction heating of cooking vessels, of the type comprising at least two concentric inductors supplied by a generator, characterized in that each inductor (I₁, I₂, I₃) is supplied by a separate generator (G₁, G₂, G₃), the number of inductors being equal to the number of supply generators.

2. Device according to Claim 1, characterized in that it comprises a control unit (8) for the independent operation of each supply generator ((G₁, G₂, G₃).

3. Device according to Claim 2, characterized in that the control unit (8) is able to make the supply generators ((G₁, G₂, G₃) operate in a sequential order during a step in which the presence of a load on the corresponding inductor (I₁, I₂, I₃) is detected, going from the generator (G₁) corresponding to the most concentric inductor (I₁) to the generator corresponding to the concentrically outermost inductor covered by the vessel (9) to be heated.

4. Device according to Claim 3, characterized in that the control unit (8) comprises means for synchronising the frequency and phase of the set of generators ((G₁, G₂, G₃) corresponding to the inductors (I₁, I₂, I₃) which have to be supplied simultaneously during a supply step.

5. Device according to any one of the preceding claims, characterized in that the supply generators (G₁, G₂, G₃) are more or less identical to one another and have approximately the same rated power, for the purpose of the modular replacement of a supply generator by another supply generator having the same characteristics.

6. Heating method using a device according to Claims 1 to 5 , comprising the following steps of:
a) detecting a physical parameter representative of the size of the vessel (9) to be heated,
b) determining, from the physical parameter detected in step a), the inductors (I₁, I₂, I₃) which are to be supplied,
c) controlling the operation of separate generators (G₁, G₂, G₃) associated with the inductors (I₁, I₂, I₃) determined in step b) which are to be supplied.

7. Method according to Claim 6, characterized in that the said physical parameter is detected by supplying the generators (G₁, G₂, G₃) in a sequential order going from the generator (G₁) corresponding to the central inductor to the generator corresponding to the outermost concentric inductor (I₃) covered by the vessel (9).

8. Method according to Claim 6 or Claim 7, characterized in that the supply to the generators (G₁, G₂, G₃) corresponding to the size of the vessel (9) to be heated is maintained, as long as the vessel (9) to be heated covers the inductors (I₁, I₂, I₃) corresponding to the said generators (G₁, G₂, G₃),

9. Method according to one of Claims 6 to 8, characterized in that the operation of the set of generators (G₁, G₂, G₃) corresponding to the inductors to be supplied is synchronized in terms of frequency and in terms of phase.
